Europäisches Patentamt

European Patent Office

Office européen des brevets

(11) Veröffentlichungsnummer : **0 064 642**
**B1**

# (12) EUROPÄISCHE PATENTSCHRIFT

(45) Veröffentlichungstag der Patentschrift :
30.07.86

(21) Anmeldenummer : 82103433.7

(22) Anmeldetag : 23.04.82

(51) Int. Cl.⁴ : **H 02 H 11/00**, G 05 F   1/14,
B 41 F 33/00

(54) Elektrische Sicherheitseinrichtung für die Steuerung einer Druckmaschine.

(30) Priorität : 02.05.81 DE 3117338

(43) Veröffentlichungstag der Anmeldung :
17.11.82 Patentblatt 82/46

(45) Bekanntmachung des Hinweises auf die Patenterteilung : 30.07.86 Patentblatt 86/31

(84) Benannte Vertragsstaaten :
AT CH FR GB IT LI NL SE

(56) Entgegenhaltungen :
FR-A- 1 594 092
FR-A- 2 116 279
GB-A- 1 393 686
US-A- 4 011 499

(73) Patentinhaber : Heidelberger Druckmaschinen Aktiengesellschaft
Kurfürsten-Anlage 52-60 Postfach 10 29 40
D-6900 Heidelberg 1 (DE)

(72) Erfinder : Rodi, Anton
Karlsruher Strasse 12
D-6906 Leimen (DE)
Erfinder : Schmidt, Edgar
Siegfriedstrasse 29
D-6149 Grasellenbach (DE)
Erfinder : Uhrig, Dieter
Mühlbergstrasse 1
D-6930 Eberbach (DE)

(74) Vertreter : Stoltenberg, Baldo Heinz-Herbert
c/o Heidelberger Druckmaschinen AG Kurfürsten-
Anlage 52-60
D-6900 Heidelberg 1 (DE)

## Beschreibung

Die Erfindung betrifft eine elektrische Sicherheitseinrichtung für die Steuerung einer Druckmaschine mit zumindest einem, mit mehreren Primär- und Sekundäranzapfungen unterschiedlicher Spannungshöhen ausgestatteten Steuertransformator, bei dem in eine von mehreren sekundärseitigen Steuerleitungen eine Spannungsüberwachungseinrichtung eingeschaltet ist, die mit einem Überspannungs-Vergleicher (35) und einem Unterspannungs-Vergleicher ausgestattet und mit einer, den Primäranzapfungen zugeordneten Spannungsumschaltvorrichtung gekoppelt ist.

Alle handelsüblichen Elektronik-Einheiten oder elektromagnetische Bauteile, die die Steuerung einer Druckmaschine beinhaltet, sind für einen gewissen Spannungsbereich ausgelegt, so daß Schwankungen der Spannung des Versorgungsnetzes innherhalb eines bestimmten Toleranzbereiches keine schädlichen Auswirkungen haben. Bei Industrie-Stromversorgungsnetzen können jedoch stärkere Spannungsschwankungen auftreten, die außerhalb des Spannungs-Toleranzbereiches der Elektronikeinheiten bzw. elektromagnetischen Bauteile liegen und unter anderem abhängig sind von der Belastung des Netzes, Entfernung des Spannungsverbrauchers zum E-Werk usw.

Sobald diese Spannungsschwankungen des Stromversorgungsnetzes die obere Spannungs-Toleranzgrenze überschreiten, besteht zumindest die Gefahr, daß elektronische oder elektromechanische Bauteile durch Überspannung geschädigt oder zerstört werden, z. B. Durchbrennen von Schaltschützen. Andererseits ist eine unzulässige Unterspannung ebenso gefährlich wie eine Überspannung, da sie zur Auslösung von Fehlfunktionen in der Steuerung führen kann. So kann z. B. die Anzugskraft von Schaltschützen nicht mehr gewährleistet sein, Relais können abschalten oder es kann zu Fehlschaltungen in elektronischen Schaltkreisen kommen. Funktionsstörungen mit Maschinenschäden können die Folge sein.

Da aufgrund der hohen Anschlußwerte bzw. der großen zu übertragenden Leistungen die Steuertransformatoren von Druckmaschinen normalerweise fest verdrahtet sind, ist eine Anpassung derselben an eine gegenüber der Nennspannung abweichende Netzspannung — abgesehen von der Gefahr einer Fehlverdrahtung — sehr zeitraubend und nur mit relativ großem Aufwand möglich. Aus diesem Grund besteht das Erfordernis möglichst stabiler Steuerspannungen für die Druckmaschine, die vorzugsweise in der Mitte des vorgegebenen Toleranzbandes liegen sollten.

Die Einrichtung der GB-A 1 393 686 offenbart eine automatische Steuervorrichtung für einen Transformator mit mehreren Anzapfungen unterschiedlicher Spannungshöhen, bei der durch kontinuierliche Kontrolle der Speisespannung deren Veränderung über bzw. unter zwei vorbestimmte Spannungswerte hinaus festgestellt und der Transformator zur Anpassung auf eine dem festgestellten Speisespannungswert entsprechende Anzapfung automatisch umgeschaltet wird. Von Nachteil ist dabei, daß die Steuervorgänge relativ unkontrolliert ablaufen, so daß beispielsweise eine dem Transformator nachgeschaltete Maschine im überlasteten Zustand infolge Netzspannungsschwankungen abschalten und nach Beendigung der Spannungsschwankungen zu einem für das Bedienungspersonal nicht vorhersehbaren Zeitpunkt unerwartet wieder zuschalten kann.

Aus der FR-A-21 16 279 ist eine elektronische Sicherheitseinrichtung für die Steuerung einer Maschine bekannt, die mit einem mit mehreren Primär- und Sekundäranzapfungen unterschiedlicher Spannungshöhen ausgestatteten Steuertransformator ausgestattet ist, wobei in eine von mehreren sekundärseitigen Steuerleitungen eine Spannungsüberwachungseinrichtung eingeschaltet ist, die bei Überschreiten oder Unterschreiten eines Spannungswertes eine den Primäranzapfungen zugeordnete Spannungsumschaltvorrichtung automatisch betätigt. Da hierbei keine definierte Fehlermeldung vorgenommen und die nachgeordnete Maschine ohne Vorwarnung bzw. Fehlerspeicherung abgeschaltet wird, sind Maschinenschäden bzw. Gefahr für das Bedienungspersonal der Maschine nicht auszuschließen. Außerdem kann die Maschine jederzeit ohne irgendeine Absicherung und ohne Fehlerbeseitigung wieder in Betrieb genommen werden, was wiederholte Fehlermeldungen bzw. Spannungsabschaltungen nach sich führen würde.

Beiden bekannten Einrichtungen haftet außerdem der gemeinsame Nachteil an, daß die Einschaltphase nicht gesondert abgesichert ist, so daß durch einen Einschaltvorgang hervorgerufene Spannungsspitzen bzw. Spannungseinbrüche ungewollte Fehlermeldungen verursachen können. Da der Einschaltstrom begrenzt ist, können mehrere Verbraucher nur zeitlich hintereinander zugeschaltet werden. Auch eine Überdimensionierung des Transformators und der zugehörigen Trafoabsicherung kann hierbei keine Abhilfe schaffen, da bei zu hoher Dimensionierung der Trafoabsicherung u. U. kein ausreichender Kurzschlußschutz mehr für den Transformator gewährleistet ist.

Ausgehend hiervon liegt der Erfindung die Aufgabe zugrunde, sowohl die Betriebssicherheit der Steuerung einer Druckmaschine als auch die Sicherheit des Bedienungspersonals zu erhöhen, wobei unkontrollierte Funktionen der Maschinensteuerung unter besonderer Berücksichtigung der Einschaltphase verhindert werden sollen und für das Bedienungspersonal eine abgesicherte Eingriffsmöglichkeit zur Anpassung der Steuerungsspannung an die Netzspannung geschaffen werden soll.

Die Lösung dieser Aufgabe besteht erfindungsgemäß darin, daß die Spannungsüberwachungseinrichtung mit einer Speichereinrichtung ausgestattet ist, die mit mehreren zeitaktivierbaren Fehlerunterdrückungseinrichtungen gekoppelt ist, welche zur Verhinderung und/oder Verzögerung durch Schaltvorgänge der Spannungsüberwachungseinrichtung bedingter Spannungsfehlermeldungen vorgesehen sind, und daß die Spannungsumschaltvorrichtung mit einer vom Zustand der Speichereinrichtung abhängigen Schaltsperre versehen ist.

Die Sicherheitseinrichtung nach der Erfindung weist den Vorteil auf, daß nicht nur die Steuerspannungen auf unzulässige Spannungsschwankungen, sondern auch gleichzeitig Anschlußfehler auf der Primärseite des Transformators zuverlässig überwacht werden können, wobei das Bedienungspersonal der Druckmaschine nach einer Fehlermeldung schnellstmöglich eine Spannungsanpassung an die sich geänderten Spannungsverhältnisse vornehmen kann. Da die Spannungsüberwachungseinrichtung ausschließlich in einem einzigen festgelegten Spannungsbereich arbeitet, ergibt sich der Vorteil einer einfachen und kostengünstigen fertigungstechnischen Herstellung und Montage der Sicherheitseinrichtung.

Durch die Anordnung einer Speichereinrichtung ergibt sich der Vorteil einer definierten Fehlermeldung, wodurch das Bedienungspersonal bewußt auf einen Spannungsfehler bzw. eine Überprüfung der Versorgungsspannung hingewiesen wird. Zwecks Verhinderung einer wahllosen bzw. unbeabsichtigten Spannungs-Umschaltung während des Maschinenbetriebes bei ordnungsgemäßer Spannung im vorgegebenen Toleranzbereich ist die Spannungsumschaltvorrichtung mit einer elektromechanischen Arretiereinrichtung ausgerüstet.

Um eine Spannungsumschaltung mit einer Mindestunterbrechungszeit für die Fehlerlöschung sicherzustellen, ist die Spannungsumschaltvorrichtung mit zwei zusätzlichen Spannungs-Unterbrechungsstellungen sowie mit einem Unterspannungs-Anschluß und einem Überspannungs-Anschluß versehen, wodurch eine Wiederinbetriebnahme der Druckmaschine mit ungelöschtem Speicher ausgeschlossen wird.

Weitere vorteilhafte Ausgestaltungen des Erfindungsgedankens sind in der nachfolgenden Beschreibung und in den Unteransprüchen 2 bis 5 sowie 7 bis 10 enthalten.

Die Erfindung ist nachfolgend anhand einer in den Zeichnungten dargestellten Grundausführung sowie einer bevorzugten Ausführungsform näher beschrieben.

Es zeigt :

Figur 1 ein Prinzipschaltbild der Spannungsversorgung einer Druckmaschine mit einer Grundausführung der erfindungsgemäßen Sicherheitseinrichtung,

Figur 2 einen Übersichtsschaltplan einer Spannungsüberwachungseinrichtung der Grundausführung,

Figur 3 ein Prinzipschaltbild der Spannungsversorgung einer Druckmaschine mit einer bevorzugten Ausführungsform der erfindungsgemäßen Sicherheitseinrichtung und

Figur 4 einen Übersichtsplan einer Spannungsüberwachungseinrichtung der bevorzugten Ausführungsform.

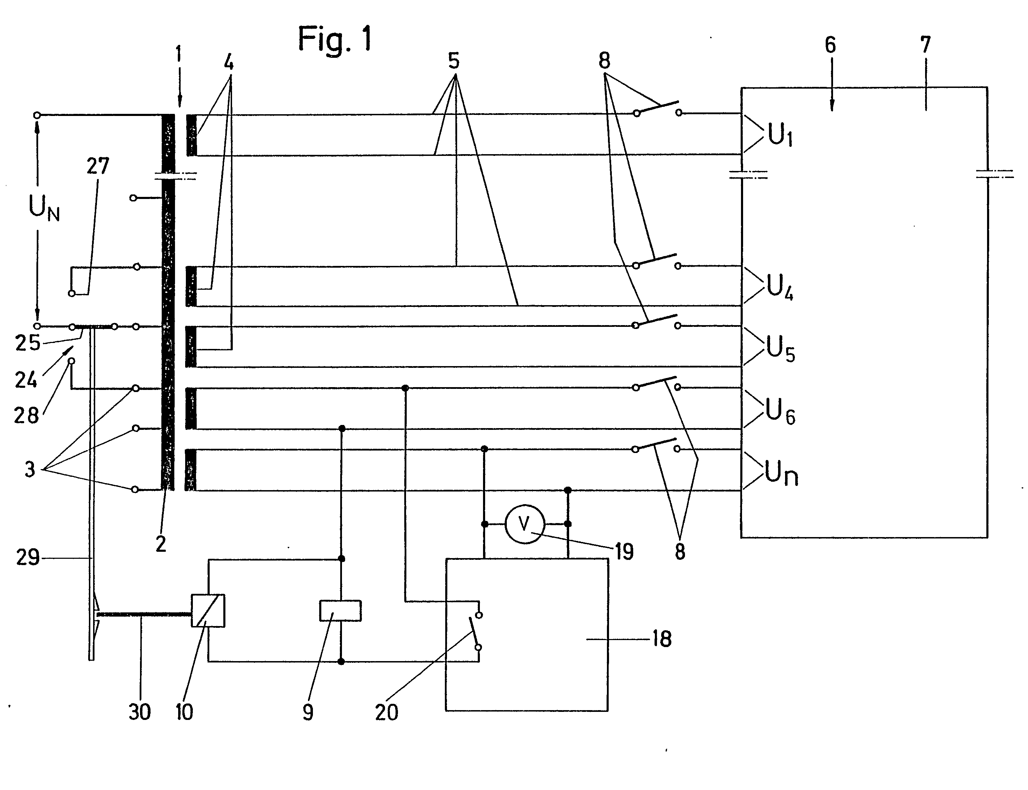

In Fig. 1 ist ein für alle weltweit vorkommenden Netzspannungen ausgelegter Steuertransformator 1 einer Druckmaschine dargestellt, dessen durchgehende Primärwicklung 2 mit einer Vielzahl von Nennspannungsanschlüssen versehen ist, die nachfolgend als Primäranzapfungen 3 bezeichnet werden. Jeder Primäranzapfung 3 ist ein bestimmter Spannungswert zugeordnet, wodurch, je nach der Spannung des vorhandenen Stromversorgungsnetzes, Nennspannungen unterschiedlicher Spannungshöhen als Eingangsspannung auf einer der Primäranzapfungen 3 gelegt werden können, z. B. die in Fig. 1 dargestellte Nennspannung $U_N$.

Die Sekundärseite des Steuertransformators 1 besteht aus einer Vielzahl von voneinander getrennten Sekundärwicklungen, die im nachfolgenden Text als Sekundäranzapfungen 4 bezeichnet werden. Die Sekundäranzapfungen 4 sind über Steuerleitungen 5 mit bekannten Verbrauchern 6, wie z. B. Schaltschütze, Bremsen, Motoren, elektronische Steuereinheiten usw., einer in Fig. 1 nur schematisch angedeuteten Maschinensteuerung 7 verbunden, die Versorgungsspannungen verschiedener Spannungshöhen (Steuerspannungen $U_1$ bis $U_n$) als Betriebsspannung benötigen.

Zur Absicherung der Verbraucher 6 sind in die Steuerleitungen 5 Schützkontakte 8 eingeschaltet, welche über eine gemeinsame Schützspule 9 zwecks Unterbrechung der Steuerspannungsversorgung, d. h. Trennung der Verbraucher 6 von den verschiedenen Steuerspannungen, betätigbar sind. Der Schützspule 9 ist ein Magnet 10 parallelgeschaltet ; beide liegen an einer gemeinsamen Steuerspannung an, z. B. in Fig. 1 an $U_6$.

Eine der von den Sekundäranzapfungen 4 des Steuertransformators 1 ausgehenden Steuerspannungen wird vergleichsweise für alle anderen Steuerspannungen kontinuierlich gemessen und überwacht, da das Teilungsverhältnis zwischen den einzelnen Steuerspannungen durch die Wicklungsanzahl der Sekundärwicklungen 4 stets konstant bleibt. Hierzu wird vorzugsweise eine Steuerspannung verwendet, die an jeder Druckmaschine, unabhängig von deren Größe und Typ sowie unabhängig vom Aufstellungsort, vorhanden ist. In dem in Fig. 1 dargestellten Beispiel ist dies die Steuerspannung $U_n$.

An diese Steuerspannung $U_n$ ist eine Spannungsüberwachungseinrichtung 18 in Form eines Spannungswächters angeschlossen, dem ein als Voltmeter 19 ausgebildetes Spannungskontrollgerät parallelgeschaltet ist. Die Skalierung des Voltmeters 19 ist in drei gekennzeichnete Spannungsbereiche unterteilt, einen Unterspannungsbereich, einen Normalspannungsbereich und einen Überspannungsbereich, wobei die Spannungs-Toleranzgrenzen durch grüne bzw. rote, Farbbalken markiert sind. Der Spannungswächter 18 ist mit einem Schließerkontakt 20 ausgestattet, der in Serie zu der Schützspule 9 geschaltet ist.

An der Primärwicklung 2 des Steuertransformators 1 ist eine Spannungsumschaltvorrichtung 24 vorgesehen, die mit einem Schaltkontakt 25 ausgerüstet ist. In der in Fig. 1 dargestellten waagerechten Position des Schaltkontaktes 25 ist die Netzspannung $U_N$ auf eine der Primäranzapfungen 3 des Steuertransformators 1 gelegt. Die Spannungsumschaltvorrichtung 24 ist mit einem Unterspannungsanschluß 27 sowie mit einem Überspannungsanschluß 28 ausgestattet. Wie in Fig. 1 nur schematisch angedeutet, ist der Schaltkontakt 25 mit einem Sperrhebel 29 gekoppelt, in dessen unteres Ende ein Schaltstößel 30 des Magneten 10 eingreift.

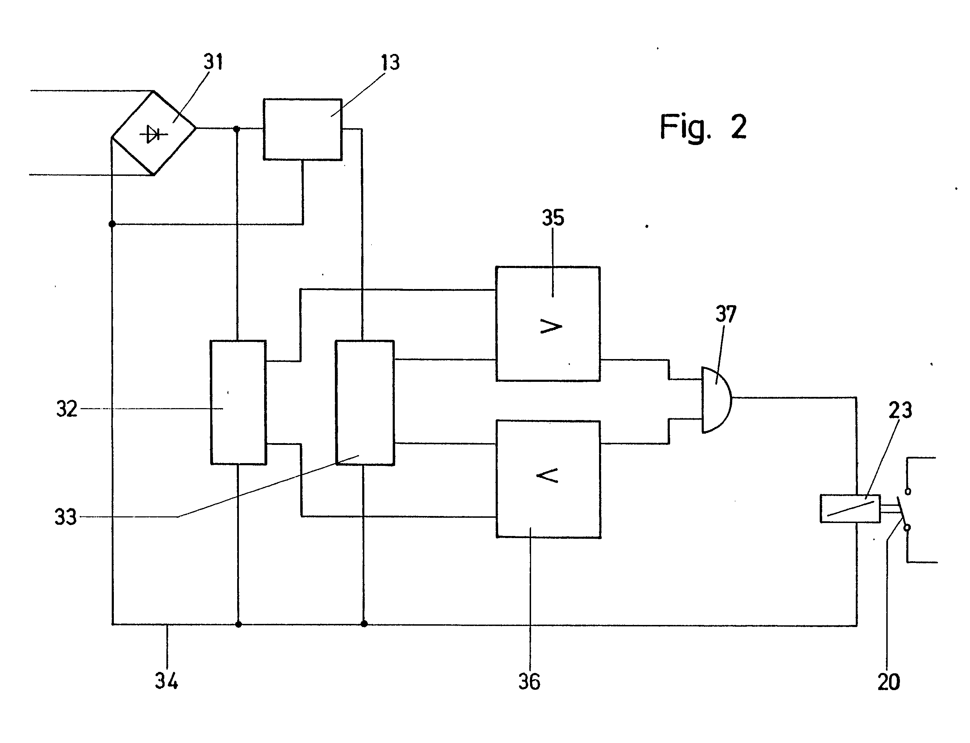

Der Aufbau und die Wirkungsweise des Spannungswächters 18 sowie die Handhabung der Spannungsumschaltvorrichtung 24 sind nachfolgend anhand des Schemaschaltplans der Grundausführung der Spannungsüberwachungseinrichtung gemäß Fig. 2 näher beschrieben.

Die Steuerspannung $U_n$ liegt als Wechselspannung an einem Gleichrichter 31 an, der diese in Gleichspannung umformt. Die Gleichspannung stellt die Eigenversorgung des Spannungswächters 18 sicher und wird einem Istwert-Spannungsteiler 32 zugeführt, der zwei Spannungs-Istwerte bildet, die konstant in einem festgelegten Verhältnis zur Eingangsspannung liegen. In Parallelschaltung zum Istwert-Spannungsteiler 32 ist ein Grenzspannungsteiler 33 angeordnet, der von einer vorgeschalteten Konstantspannungsquelle 13 mit einer konstanten Gleichspannung versorgt wird und daraus kontinuierlich zwei Spannungs-Sollwerte bildet, die unabhängig von den Schwankungen der Eingangsspannung des Gleichrichters 31 sind. Beide Spannungsteiler 32 und 33 können beispielsweise als Operationsverstärker ausgebildet sein und liegen an Bezugsmasse 34 an.

Die Spannungs-Istwerte sowie die Spannungs-Sollwerte werden gemeinsam je einem Überspannungs-Vergleicher 35 und einem Unterspannungs-Vergleicher 36 zum Soll/Istwert-Vergleich zugeführt, die beide den Spannungsteilern 32 und 33 nachgeschaltet sind. Dem Überspannungs-Vergleicher 35 ist als obere Spannungs-Toleranzgrenze ein Überspannungs-Grenzwert $U_{max}$ und dem Unterspannungs-Vergleicher 36 als untere Spannungs-Toleranzgrenze ein Unterspannungs-Grenzwert $U_{min}$ zur Vergleichswertbildung vorgegeben. Beide Toleranzgrenzen sind einstellbar und dürfen im Normalfall vom Spannungs-Istwert nicht über- bzw. unterschritten werden.

Den Vergleichern 35 und 36 ist ein gemeinsames UND-Glied 37 nachgeschaltet, dessen Ausgang ein auf Bezugsmasse 34 liegendes Relais 23 steuert, wobei der Relais-Kontakt der in Fig. 1 im Spannungswächter 18 dargestellte Schließerkontakt 20 ist.

Bei der Installation der Druckmaschine wird die vorhandene Netzspannung $U_N$ über die Spannungsumschaltvorrichtung 24 auf die Primäranzapfung 3 des Steuertransformators 1 gelegt, die diesem Spannungswert zugeordnet ist. Durch das Einschalten des nicht dargestellten Hauptschalters bei Inbetriebnahme der Druckmaschine liegt somit an der Primärwicklung 2 die Netzspannung $U_N$ an. Diese wird im Steuertransformator 1 auf eine der Anzahl der Sekundärwicklungen 4 entsprechende Anzahl von Steuerspannungen unterschiedlicher Spannungshöhen umtransformiert. Unter anderem liegt dabei auch der Spannungswächter 18 zusammen mit dem Voltmeter 19 an der Steuerspannung $U_n$ an, wobei eine optische Kontrolle der Steuerspannung für den Drucker durch das Voltmeter 19 gegeben ist.

Unmittelbar nach Anlegen der Netzspannung $U_N$ an die Primärwicklung 2 des Steuertransformators 1 prüft der Spannungswächter 18 vor einer Freigabe der Steuerung, ob sich die ihm als Betriebsspannung angebotene Steuerspannung $U_n$ innerhalb der seinen Spannungs-Vergleichern 35 und 36 vorgegebenen Spannungs-Toleranzgrenzen befindet.

Werden diese Spannungs-Grenzwerte entweder nach oben oder unten über- bzw. unterschritten, erzeugt einer der Spannungs-Vergleicher 35 bzw. 36 ein Fehlersignal, welches an einem der beiden Eingänge des nachgeschalteten UND-Gliedes 37 als logischer Signalzustand L anliegt, wodurch auch der Ausgang des UND-Gliedes 37 diesen Signalzustand führt. Dadurch bleibt das nachgeschaltete Relais 23 spannungslos und der Schließerkontakt 20 im Spannungswächter 18 geöffnet. Der die Schützspule 9 aktivierende Stromkreis sowie die zugehörigen Schützkontakte 8 in den Steuerleitungen 5 verbleiben weiterhin in geöffnetem Zustand, so daß es in diesem Fall zu keiner Freigabe der Steuerung kommt.

Liegt jedoch die vom Spannungswächter 18 gemessene Spannung innerhalb der vorgegebenen Spannungs-Toleranzgrenzen, dann herrscht sowohl an beiden Eingängen als auch am Ausgang des UND-Gliedes 37 der logische Signalzustand H vor. Aufgrunddessen wird die Spule des nachgeschalteten Relais 23 unter Spannung gesetzt, wodurch diese anzieht und den Schließerkontakt 20 im Spannungswächter 18 schließt. Dadurch wird der Stromkreis, an dem die Schützspule 9 anliegt, geschlossen und dieselbe unter Spannung gesetzt. Sie zieht en und bewirkt das Schließen der zugehörigen Schützkontakte 8 in den Steuerleitungen 5. Die Spannungsversorgung der Maschinensteuerung 7 ist somit sichergestellt.

Im Störfall während des Betriebes läßt der Spannungswächter 18 beim Feststellen einer unzulässigen Über- bzw. Unterspannung über seinen Schließerkontakt 20 die Schützspule 9 abfallen, was zur Abschaltung sämtlicher Steuerspannungen $U_1$ bis $U_n$ der Verbraucher 6 in der zuvor beschriebenen Weise führt.

Der Drucker erkennt die Fehlermeldung des Spannungswächters 18 anhand einer nicht dargestellten und näher beschriebenen, am Bedienungspult der Druckmaschine angeordneten Kontrollanzeige, die z. B. als Lampe oder Leuchtdiode ausgebildet sein kann. Beim Vorliegen eines Spannungsfehlers erlischt die im Normalfall konstant aufleuchtende Kontrollanzeige.

Die Aufrechterhaltung der Betriebsspannung des Spannungswächters 18 und des parallel zu diesem geschalteten Voltmeters 19 ist vollkommen unabhängig von einer Spannungs-Fehlermeldung und Unterbrechung der Spannungsversorgung der Maschinensteuerung 7 ; der Spannungswächter 18 und das Voltmeter 19 liegen konstant an der Spannung $U_n$ an. Im Fehlerfall muß deshalb der Drucker anhand der unterteilten Anzeige des Voltmeters 19 feststellen, ob sich die vorhandene Spannung im unzulässigen Unter- oder Überspannungsbereich befindet. Anhand dieser Feststellung paßt er mittels der Spannungsumschaltvorrichtung 24 die Steuerspannung der Maschine an die momentan vorhandene Netzspannung $U_N$ an der Primärwicklung 2 des Steuertransformators 1 an. Wurde die Fehlermeldung z. B. durch Unterschreiten des vorgegebenen Unterspannungs-Grenzwertes $U_{min}$ ausgelöst, so verstellt der Drucker den Schaltkontakt 25 entweder manuell oder ferngesteuert auf den Unterspannungsanschluß 27, dem ein niedrigerer Spannungswert zugeordnet ist, der dem auf dem Voltmeter 19 angezeigten Spannungswert am nächsten kommt. Bei Anzeige einer Überspannung wird im umgekehrten Sinne durch Umschalten des Schaltkontaktes 25 auf den Überspannungsanschluß 28 verfahren.

Der Drucker kann die Spannungsumschaltvorrichtung 24 nur dann betätigen, wenn der nicht dargestellte Hauptschalter ausgeschaltet ist oder der Spannungswächter 18 einen Fehler gemeldet und die Spannungsversorgung unterbrochen hat. Erst durch Öffnen des Schließerkontaktes 20 wird der Stromkreis, an dem der Magnet 10 anliegt, unterbrochen, wodurch dieser spannungslos wird, so daß dessen Schaltstößel 30 den mit dem Schaltkontakt 25 gekoppelten Sperrhebel 29 zur Verstellung freigibt.

Nach Einschalten des Hauptschalters zieht nach einer Spannungskontrolle des Spannungswächters 18 und anschließender Freigabe der Steuerung der Magnet 10 bei geschlossenem Kontakt 20 wieder an, wodurch dessen Schaltstößel 30 in den Sperrhebel 29 eingreift und somit eine Betätigung der Spannungsumschaltvorrichtung bei ordnungsgemäßer Spannung während des Maschinenlaufes verhindert. Erst wenn der Schließerkontakt 20 des Spannungswächters 18 wieder öffnet und den Magnet 10 wieder spannungslos macht, ist eine Spannungsumschaltung möglich.

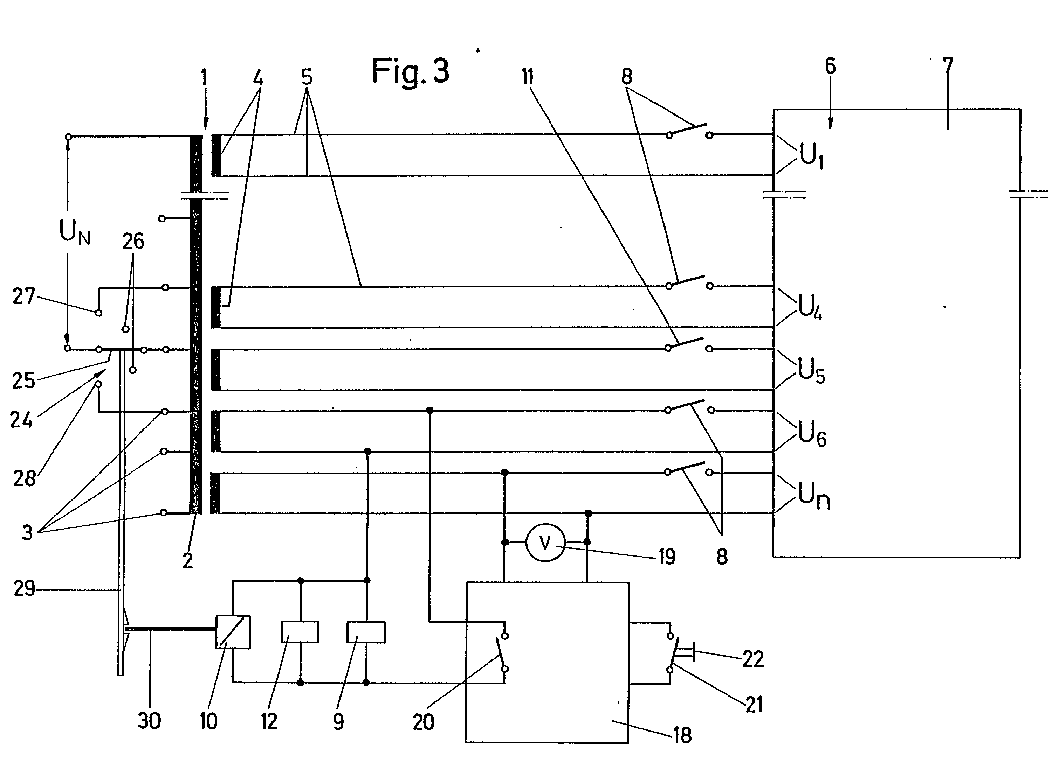

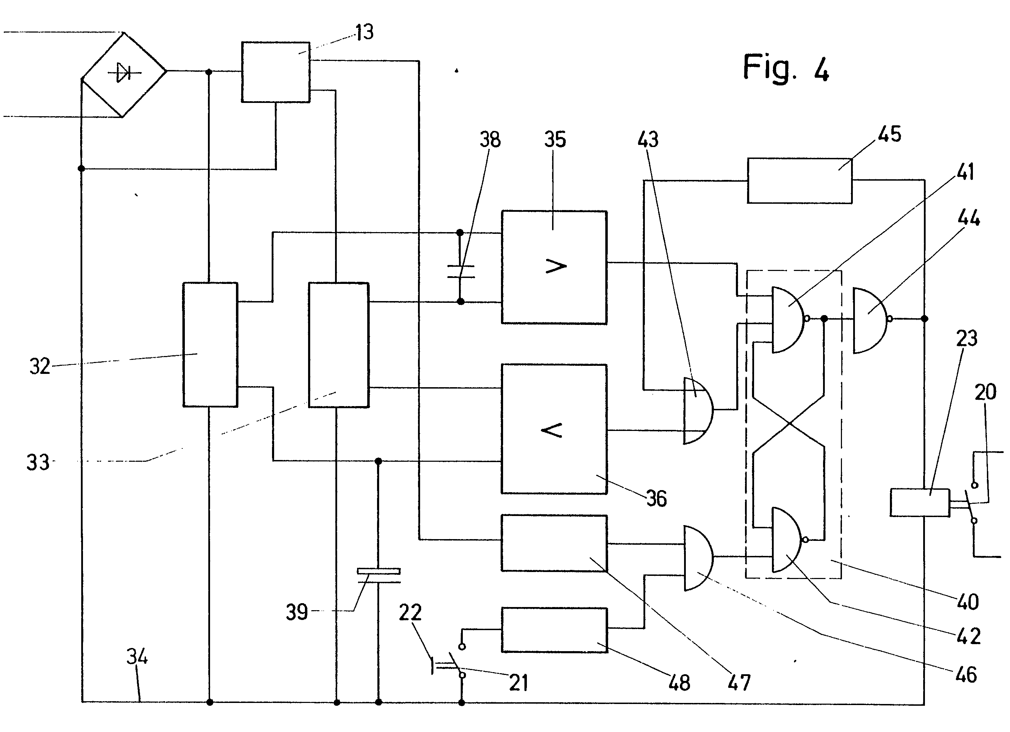

Gemäß einer in den Fig. 3 und 4 dargestellten bevorzugten Ausführungsform der Erfindung ist die Spannungsumschaltvorrichtung 24 zusätzlich mit zwei definierten Spannungs-Unterbrechungsstellungen 26 versehen, welche zwischen der jeweiligen Primäranzapfung 3, auf die die Netzspannung $U_N$ gelegt ist, und dem Unterspannungsanschluß 27 bzw. dem Überspannungsanschluß 28 liegen.

Außerdem ist in die Steuerleitung 5, welche die Spannungsversorgung $U_5$ für die Bremsen der Druckmaschine sichert, anstelle eines Schützkontaktes 8 ein Relaiskontakt 11 eingebaut, der über ein handelsübliches, abfallverzögertes Zeitglied, zeitverzögert betätigt wird. Das Zeitglied ist vorzugsweise in Form eines handelsüblichen Zeitrelais 12 realisiert, das der Schützspule 9 sowie dem Magnet 10 parallelgeschaltet ist.

Der Spannungswächter 18 ist in der bevorzugten Ausführungsform zusätzlich mit einem außenliegenden Rücksetzanschluß 21 versehen, der über einen Rücksetztaster 22 ansteuerbar ist.

Wie in Fig. 4 dargestellt, ist zwischen die beiden Eingänge des Überspannungs-Vergleichers 35 ein als Kondensator ausgebildeter Differenzierer 38 geschaltet. In der Verbindungsleitung zwischen dem Istwert-Spannungsteiler 32 und dem Unterspannungs-Vergleicher 36 ist ein auf Bezugsmasse 34 liegender Integrator angeordnet, der beispielsweise ebenfalls durch eine Kondensator 39 gebildet werden kann.

Bei der bevorzugten Ausführungsform soll die Druckmaschine auch dann nicht wieder einschalten, wenn die Spannung wieder in Ordnung ist, sondern erst auf ausdrücklichen Befehl. Aufgrund dessen ist es erforderlich, das Fehlersignal zu speichern.

Das Relais 23 wird deshalb nicht wie bei der zuvor beschriebenen Grundausführung unmittelbar durch das UND-Glied 37, sondern stattdessen durch einen zwischengeschalteten Fehlerspeicher, ausgebildet in Form eines Flipflops 40, angesteuert. Das Flipflop 40 besteht aus zwei miteinander kreuzgekoppelten NAND-Gattern 41 und 42, von denen eines ein Dreifach-NAND 41 und das andere ein Zweifach-NAND-Gatter 42 ist. Dabei sind die Ausgänge der NAND-Gatter 41 und 42 jeweils wechselseitig als ein Eingang auf das andere NAND-Gatter 42 bzw. 41 gelegt.

Zwei Eingänge des Dreifach-NAND-Gatters 41 sind mit den Spannungsvergleichern 35 und 36 verbunden, einer direkt mit dem Überspannungs-Vergleicher 35, der andere indirekt mit dem Unterspannungs-Vergleicher 36 unter Zwischenschaltung eines diesem nachgeordneten ODER-Gliedes 43.

Dem Flipflop 40 ist ein Negator 44 nachgeschaltet, dessen Ausgang nicht nur das Relais 23 ansteuert, sondern auch mit einem der drei Setzeingänge des Flipflops 40 unter Zwischenschaltung einer Unterspannungs-Fehlerunterdrückung 43, 45 rückgekoppelt ist. Die Unterspannungs-Fehlerunterdrückung besteht aus dem ODER-Glied 43 und einem auf dessen einen Eingang führendes Monoflop 45 und bewirkt eine Fehlerunterdrückung bei Unterspannung infolge Einschaltstromspitzen der Verbraucher.

Der zweite Eingang des NAND-Gatters 42 ist als Rücksetzeingang des Flipflops 40 ausgelegt und mit dem Ausgang eines vorgeschalteten UND-Gliedes 46 verknüpft, dessen einer Eingang unter Zwischenschaltung einer Einschaltunterdrückung 47 mit der Konstantspannungsquelle 13 verbunden ist. Der zweite Eingang des UND-Gliedes 46 führt über einen Impulsformer 48 zu dem auf Bezugsmasse 34 bezogenen Rücksetzkontakt 21.

Die Funktionsweise sowie die Handhabung der bevorzugten Ausführungsform der Erfindung sind nachfolgend näher beschrieben:

Während des Maschinenlaufes können in der Druckmaschine Spannungsspitzen auftreten, die sich störend auf die Steuerspannungen $U_1$-$U_n$ niederschlagen. Dabei muß man einerseits zwischen energiereichen, andererseits zwischen energiearmen Spannungsspitzen unterscheiden. Die energiereichen Spannungsspitzen können sich auf die elektronischen Steuereinheiten schädlich auswirken und bis zur Zerstörung deren Bauteile führen, weshalb in diesem Fall eine sofortige Spannungsunterbrechung der Maschinensteuerung 7 angestrebt wird. Energiearme Spannungsspitzen sollen jedoch zu keiner Spannungsunterbrechung führen, da die Elektronik der Maschinensteuerung 7 für solche Störspannungen ausgelegt ist.

Zur Unterdrückung einer Spannungsfehlermeldung aufgrund dieser energiearmen Spannungsspitzen ist der zwischen die Eingänge des Überspannungs-Vergleichers 35 geschaltete Kondensator 38 vorgesehen, der hochfrequente Spannungsspitzen, die sich auf dem Spannungs-Istwert abbilden, auf den Überspannungs-Grenzwert $U_{max}$ überträgt. Dadurch wird ein überschreiten des Grenzwertes $U_{max}$ und somit eine Fehlermeldung verhindert.

Die Steuerspannungen $U_1$-$U_n$ können nicht nur durch die zuvor erwähnten Spannungsspitzen, sondern auch durch Spannungseinbrüche gestört werden, die bei Überschreitung einer bestimmten Größenordnung zu unkontrollierten Funktionen, z. B. Abfallen von Schaltschützen, führen können. Es gilt deshalb, eine Unterspannungs-Fehlermeldung des Spannungswächters 18 infolge eines Spannungseinbruches, welcher die zuvor erwähnte Größenordnung nicht überschreitet, zu verhindern. Hierzu ist der Kondensator 39 vorgesehen, der vor dem Unterspannungs-Vergleicher 36 dem Spannungs-Istwert als Integrator zugeschaltet ist.

Der Kondensator 39 bewirkt bei einem totalen Zusammenbruch der Spannung auf den Wert Null eine sehr kurze Abschaltzeit. Bei einem Spannungseinbruch, der den Unterspannungs-Grenzwert $U_{min}$ nur um einen geringen Wert unterschreitet, wird die Abschaltzeit durch die veränderte Entladungskurve des Kondensators 39 verlängert, wodurch eine Fehlermeldung verhindert wird, wenn innerhalb dieser Zeit die sich erholende Spannung den Unterspannungs-Grenzwert $U_{min}$ wieder überschreitet. Der Kondensator 39 ist entsprechend den gewünschten Anforderungen hinsichtlich der Funktionssicherheit ausgelegt.

Die Schaltzustände des Spannungswächters 18 während des Maschinenbetriebes sind nachfolgend näher erläutert.

Einschaltphase

Unmittelbar nach Einschalten der Spannung mittels des nicht dargestellten Hauptschalters erzeugen die beiden Spannungs-Vergleicher 35 und 36 — ordnungsgemäße Spannung vorausgesetzt — Gutmeldungen, aufgrund derer zwei Eingänge des Dreifach-NAND-Gatters 41 den logischen Signalzustand H führen. Gleichzeitig wird die Einschaltunterdrückung 47, welche beispielsweise als RC-Glied ausgebildet sein kann, wirksam. Sie erzeugt nur für eine vorgegebene Zeitspanne — unabhängig von der Höhe der ihr zugeführten Konstantspannung — ein Signal, das als logischer Signalzustand L an einem Eingang des UND-Gliedes 46 ansteht, wodurch auch dessen Ausgang sowie der in das Zweifach-NAND-Gatter 42 führende Rücksetzeingang des nachgeschalteten Flipflops 40 während dieser Zeit den logischen Signalzustand L übernehmen. Da dieser am Ausgang des NAND-Gatters 42 in ein H negiert wird und dessen Ausgangssignal auf einen Eingang des Dreifach-NAND-Gatters 41 rückgeführt ist, weisen nunmehr dessen alle drei Eingänge den logischen Signalzustand H auf, so daß folglich am Ausgang des NAND-Gatters 41 ein L vorherrscht. Dadurch wird verhindert, daß während des Einschwingvorganges der Spannung in der Einschaltphase eine Spannungsfehlermeldung abgespeichert wird, solange, bis der logische Signalzustand am Rücksetzeingang des Flipflops 40 in ein H überwechselt.

Durch den dem NAND-Gatter 41 nachgeschalteten Negator 44 wird der logische Signalzustand L in ein H umgewandelt und mit diesem nach einer allgemein üblichen und deshalb nicht dargestellten Verstärkung das Relais 23 angesteuert und deren Relaisspule unter Spannung gesetzt. Dadurch wird der Schließerkontakt 20 im Spannungswächter 18 geschlossen und über die Schützspule 9 und die zugehörigen Schützkontakte 8 die Spannungsversorgung der Druckmaschine freigegeben.

Anlaufphase

Sobald das Relais 23 nach erfolgter Kontrolle und Freigabe der Steuerung durch den Spannungswächter 18 angezogen hat, steht den Verbrauchern 6, wie z. B. Motoren, elektronischen Steuereinheiten usw., bei Bedarf Spannung zur Verfügung. Da mehrere Motoren gleichzeitig anlaufen können, deren Anlaufstrom jeweils um ein Vielfaches größer sein kann als ihr normaler Betriebsstrom, besteht die Gefahr eines kurzfristigen Spannungseinbruches der Steuerspannungen, der eventuell zu einer Unterspannungs-Fehlermeldung des Unterspannungs-Vergleichers 36 und somit zu einer Spannungsunterbrechung der Maschinensteuerung 7 führen kann.

Da sich die Spannung jedoch innerhalb kürzester Zeit nach dem Abklingen dieser Einschaltstromspitze erfahrungsgemäß wieder erholt, muß diese Zeit der Anlaufphase überbrückt und eine unerwünschte Spannungsunterbrechung durch den Spannungswächter 18 ausgeschlossen werden. Die Unterdrückung einer Spannungsfehlermeldung aufgrund dieses kurzzeitigen Spannungseinbruches erfolgt über die hierfür vorgesehene Unterspannungs-Fehlerunterdrückung 43, 45, bestehend aus dem Monoflop 45 in Verbindung mit dem diesem und dem Unterspannungs-Vergleicher 36 gemeinsam nachgeschalteten ODER-Glied 43. Für eine vorgegebene Überbrückungszeit von beispielsweise 200 Millisekunden erzeugt das am Eingang des Monoflops 45 anstehende H-Signal, mit dem auch das Relais 23 angesteuert wird, einen Impuls, der am zweiten Eingang des ODER-Gliedes in Form eines H-Signals ansteht, so daß auch dessen Ausgang diesen Signalzustand übernimmt. Dadurch ist das ODER-Glied 43 für die Überbrückungszeit gegen eine Fehlermeldung vom Unterspannungs-Vergleicher 36 gesperrt, die solange unterdrückt wird, bis der Signalzustand des oberen Einganges des ODER-Gliedes 43 nach Ablauf der Überbrückungszeit in den logischen Signalzustand L überwechselt, sobald die Impulszeit des Monoflops 45 abgelaufen ist. Die Überbrückungszeit ist derart bemessen, daß das Monoflop 45 erst dann wieder am Ausgang ein L erzeugt, nachdem sich die Spannung sicher erholt hat.

Zu diesem Zeitpunkt kann man davon ausgehen, daß der Unterspannungs-Vergleicher 36 — ordnungsgemäße Spannung vorausgesetzt — eine Spannungsgutmeldung erzeugt, so daß nach wie vor derselbe logische Signalzustand H am Ausgang des ODER-Gliedes 43 erhalten bleibt.

Nach Ablauf der zuvor erwähnten Einschalt-Unterdrückungszeit ändert sich der logische Signalzustand am oberen Eingang des UND-Gliedes 46 in ein H.

Da auch der zweite Eingang des UND-Gliedes 46 im Normalbetrieb der Maschine, d. h. bei nicht angesteuertem und somit offenem Rücksetzkontakt 21, stets das logische Signal H führt, übernimmt auch der Ausgang diesen Signalzustand und überträgt ihn auf den Eingang des Zweifach-NAND-Gatters 42. Der mit dem Ausgang des NAND-Gatters 42 rückgekoppelte dritte Eingang des NAND-Gatters 41 führt somit weiterhin den logischen Signalzustand H, der zusammen mit den beiden anderen Eingängen ein L des Ausganges des NAND-Gatters 41 bewirkt und dadurch über den Negator 44 ein fortgesetztes Ansteuern des Relais 23 ermöglicht. Somit ist die Phase des Normalbetriebes der Maschine mit ordnungsgemäßer Spannungsüberwachung erreicht.

Störungsmeldung

Im Falle einer unzulässigen Unter- bzw. Überspannung erzeugt einer der beiden Spannungs-Vergleicher 35 bzw. 36 eine Spannungs-Fehlermeldung. Bei der nachfolgenden Betrachtung eines Störzustandes wird angenommen, daß der Unterspannungs-Grenzwert $U_{min}$ unterschritten wird und der Unterspannungs-Vergleicher 36 die Fehlermeldung abgibt, wodurch der logische Signalzustand am unteren Eingang des ODER-Gliedes 43 in L überwechselt, der folglich auch von dessen Ausgang übernommen wird. Aufgrunddessen steht am mittleren Eingang des Dreifach-NAND-Gatters 41 nunmehr das logische Signal L an, wodurch an dessen Ausgang ein H vorherrscht. Der nachgeschaltete Negator 44 wandelt den Signalwert in ein L um, das ein Abfallen des Relais 23 bewirkt, wodurch sich der Schließerkontakt 20 im Spannungswächter 18 öffnet. Dadurch wird der Stromkreis, an dem die Schützspule 9 anliegt, unterbrochen und die zugehörigen Schützkontakte 8 in den Steuerleitungen 5 zwecks Unterbrechung der Spannungsversorgung geöffnet.

Die Speicherfunktion des Flipflops 40 wird dadurch erzielt, daß der am Ausgang des NAND-Gatters 41 anstehende logische Signalzustand H auf den oberen Eingang des NAND-Gatters 42 gelegt wird. Da auch am Rücksetz-Eingang des Flipflops 40, der dem zweiten Eingang des NAND-Gatters 42 entspricht, nach wie vor das logische Signal H ansteht, stellt sich am negierten Ausgang des NAND-Gatters 42 der gegenteilige Schaltzustand L ein, der auf den dritten, unteren Eingang des NAND-Gatters 41 rückgeführt wird, so daß nunmehr zwei von dessen drei Eingängen diesen Signalzustand führen. Auch wenn der Unterspannungs-Vergleicher 36 wieder eine Gutmeldung erzeugt und der zweite, mittlere Eingang des NAND-Gatters 41 dadurch wieder in den logischen Signalwert H überwechselt, bleibt durch das am dritten Eingang weiterhin anstehende L-Signal der Fehler im Flipflop 40 gespeichert und dessen Signalzustand ändert sich nicht. Durch diese Abspeicherung des Fehlersignals wird ein häufiges Ein- und Ausschalten der Spannungsversorgung vermieden und gleichzeitig das Bedienungspersonal auf einen Spannungsfehler aufmerksam gemacht.

Die Druckabstellung der Maschine wird in bekannter Weise mittels eines nicht dargestellten und näher beschriebenen Magnets eingeleit und unter Ausnutzung der Rotationsbewegung der Zylinder mit bekannten mechanischen Methoden durchgeführt.

Eine Unterbrechung der Spannungsversorgung durch den Spannungswächter 18 führt normalerweise zu einem sofortigen Stillstand der Druckmaschine, da auch die Steuerspannung für die Bremsen sofort unterbrochen wird. Dadurch ist ein Abstellen des Druckes, insbesondere bei niedrigen Druckgeschwindigkeiten, nicht mehr sichergestellt, was in diesem Falle unnötigerweise zu Beschädigungen des Gummituches (Abplattung, Verkleben der Zylinder, Beschädigung der Druckplatte usw.) führen kann, deren Beseitigung zeitraubend und kostenspielig ist (Gummituch und/oder Platte auswechseln, Waschen der Zylinder usw.). Aus diesem Grund darf die für die Ansteuerung der Bremsen zuständige Spannungsversorgung U nicht bereits mit den anderen Steuerspannungen gleichzeitig, sondern muß stattdessen zeitverzögert abgeschaltet werden, damit genügend Zeit zur Druckabstellung vorhanden bleibt. Deshalb wird der zur Aufrechterhaltung der Bremsenspannung in die Steuerleitung 5 eingeschaltete Relais-Kontakt 11 nicht wie die anderen Schützkontakte 8 über die Schützspule 9 gesteuert, sondern stattdessen über das abfallverzögerte Zeitrelais 12. Dessen eingeschaltetes Zeitglied bewirkt, daß der zugehörige Relaiskontakt 11 erst mit einer Verzögerung von beispielsweise 2,5 Sekunden öffnet, was zur sicheren Abstellung des Druckes vollkommen ausreicht. Erst danach fallen die Bremsen der Druckmaschine ein.

Rücksetzvorgang (Löschen des Speichers)

Um eine Fehlerspeicherung wieder zu löschen und dadurch das Flipflop 40 in seinen Ursprungszustand rückzuversetzen, soll zweckmäßigerweise eine Fehlerdiagnose mittels des Voltmeters 19 vom Bedienungspersonal durchgeführt werden, anhand deren Ergebnis verschiedene Maßnahmen zur Speicherrücksetzung möglich sind.

1. Löschung mittels des Rücksetztasters 22, wodurch bei geschlossenem Rücksetzkontakt 21 ein statisches Signal im nachgeschalteten Impulsformer 48 in einen dynamischen Impuls umgewandelt wird, der als Rücksetzsignal am Rücksetzeingang des Flipflops 40 ansteht. Eine ständige Ansteuerung des Rücksetzkontaktes 21 vermag deshalb die Speicherfunktion nicht aufzuheben.

2. Löschung infolge bewußter Wegnahme der Netzspannung $U_N$ mittels des Hauptschalters.

3. Löschung durch Anpassung der Steuerspannungen $U_1$-$U_n$ an die momentan vorhandene Netzspannung $U_n$ mittels der Spannungsumschaltvorrichtung 24, wobei beim Umschalten des Schaltkontaktes 25 entweder auf den Unterspannungs-Anschluß 27 oder den Überspannungs-Anschluß 28 eine der beiden definierten Spannungs-Unterbrechungsstellungen 26 überfahren werden muß. Die beiden Spannungs-Unterbrechungsstellungen 26 sind als mechanische Raststellungen ausgelegt, die beim Überfahren mit dem Schaltkontakt 25 eine infolge Zeitverzögerung zwangsweise Unterbrechung der Spannungsversorgung bewirken. Dadurch wird der Spannungswächter 18 kurzzeitig spannungslos, was zwangsweise zu einer Resertierung des im Flipflop 40 gespeicherten Fehlers führt.

**Patentansprüche**

1. Elektrische Sicherheitseinrichtung für die Steuerung (7) einer Druckmaschine mit zumindest einem, mit mehreren Primär- und Sekundäranzapfungen (3, 4) unterschiedlicher Spannungshöhen ausgestatteten Steuertransformator (1), bei dem in eine von mehreren sekundärseitigen Steuerleitungen (5) eine Spannungsüberwachungseinrichtung (18) eingeschaltet ist, die mit einem Überspannungs-Vergleicher (35) und einem Unterspannungs-Vergleicher (36) ausgestattet und mit einer, den Primäranzapfungen (3) zugeordneten Spannungsumschaltvorrichtung (24) gekoppelt ist, dadurch gekennzeichnet, daß die Spannungsüberwachungseinrichtung (18) mit einer Speichereinrichtung (40) ausgestattet ist, die mit mehreren zeitaktivierbaren Fehlerunterdrückungseinrichtungen (12 ; 38 ; 39 ; 43, 45 ; 47) gekoppelt ist, welche zur Verhinderung und/oder Verzögerung durch Schaltvorgänge der Spannungsüberwachungseinrichtung (18) bedingter Spannungsfehlermeldungen vorgesehen sind, und daß die Spannungsumschaltvorrichtung (24) mit einer vom Zustand der Speichereinrichtung (40) abhängigen Schaltsperre (10, 29, 30) versehen ist.

2. Elektrische Sicherheitseinrichtung nach Anspruch 1, dadurch gekennzeichnet, daß eine (43, 45) der Fehlerunterdrückungseinrichtungen zumindest zur Verhinderung der Abspeicherung einer Unterspannungs-Fehlermeldung infolge eines durch Einschaltstromspitzen bedingten Spannungseinbruches vorgesehen ist.

3. Elektrische Sicherheitseinrichtung nach Anspruch 1, dadurch gekennzeichnet, daß eine (47) der Fehlerunterdrückungseinrichtungen ausschließlich während der Einschaltphase der Spannungsüberwachungseinrichtung (18) aktivierbar ist und zur Verhinderung auf die Einschaltphase bezogener, einschwingvorgangsbedingter Spannungsfehler vorgesehen ist.

4. Elektrische Sicherheitseinrichtung nach Anspruch 1, dadurch gekennzeichnet, daß eine (38) der Fehlerunterdrückungseinrichtungen als Differenzierer zur Verhinderung der Abspeicherung einer Überspannungs-Fehlermeldung bei energiearmen Spannungsspitzen und eine (39) weitere der Fehlerunterdrückungseinrichtungen als Integrator zur Verhinderung der Abspeicherung einer Unterspannungs-Fehlermeldung bei Spannungseinbrüchen bis zu einer vorgegebenen Größenordnung ausgebildet ist.

5. Elektrische Sicherheitseinrichtung nach Anspruch 1, dadurch gekennzeichnet, daß eine (12) der Fehlerunterdrückungseinrichtungen als abfallverzögertes Zeitglied zur zeitverzögerten Abschaltung zumindest einer Steuerspannung ausgebildet ist.

6. Elektrische Sicherheitseinrichtung nach Anspruch 1, dadurch gekennzeichnet, daß die Spannungsumschaltvorrichtung (24) mit zwei zusätzlichen Spannungs-Unterbrechungs-Stellungen (26) sowie mit einem Unterspannungsanschluß (27) und einem Überspannungsanschluß (28) versehen ist.

7. Elektrische Sicherheitseinrichtung nach Anspruch 1, dadurch gekennzeichnet, daß die Spannungsüberwachungseinrichtung (18) mit einem parallelgeschalteten Spannungskontrollgerät (19) sowie mit einem Schließerkontakt (20) versehen ist, der mit einer in Serie geschalteten Schützspule (9) und einem zu dieser parallelgeschalteten Magnet (10) an einer gemeinsamen Steuerspannung anliegt, wobei die Schützspule (9) in den Steuerleitungen (5) angeordnete Schützkontakte (8) steuert und der Magnet (10) mit einem Schaltstößel (30) in einen an einem Schaltkontakt (25) der Spannungsumschaltvorrichtung (24) angelenkten Sperrhebel (29) eingreift.

8. Elektrische Sicherheitseinrichtung nach Anspruch 7, dadurch gekennzeichnet, daß die Spannungsüberwachungseinrichtung (18) mit einem Gleichrichter (31) versehen ist, dem ein Istwert-Spannungsteiler (32) nachgeschaltet ist, wobei dem Gleichrichter (31) eine zur Spannungsversorgung eines Grenzspannungsteilers (33) vorgesehene Konstantspannungsquelle (13) nachgeordnet ist, und daß sowohl der Istwert-Spannungsteiler (32) als auch der Grenzspannungsteiler (33) je mit dem Überspannungs-Vergleicher (35) und dem Unterspannungs-Vergleicher (36) verbunden sind, deren Ausgängen ein gemeinsames UND-Glied (37) nachgeschaltet ist, dessen Ausgangssignal zur Ansteuerung eines Relais (23) vorgesehen ist, das den Schließerkontakt (20) der Spannungsüberwachungseinrichtung (18) steuert.

9. Elektrische Sicherheitseinrichtung nach einem der Ansprüche 1 bis 8, dadurch gekennzeichnet, daß die als Differenzierer ausgebildete Fehlerunterdrückungseinrichtung zwischen die beiden Eingänge des Überspannungs-Vergleichers (35) und die als Integrator ausgebildete Fehlerunterdrückungseinrichtung (39) zwischen den Istwert-Spannungsteiler (32) und den Unterspannungs-Vergleicher (36) geschaltet ist, wobei sowohl dem Überspannungs-Vergleicher (35) als auch dem Unterspannungs-Vergleicher (36) die Speichereinrichtung (40) nachgeordnet ist, deren Rücksetzeingang über die ausschließlich während der Einschaltphase der Spannungsüberwachungseinrichtung (18) aktivierbare Fehlerunterdrückungseinrichtung (47) oder über eine zusätzliche Rücksetzeinrichtung (21, 22, 48) ansteuerbar ist, und daß zwischen dem Ausgang eines der Speichereinrichtung (40) nachgeschalteten Negators (44) und einem Setzeingang der Speichereinrichtung (40) die zur Verhinderung der Abspeicherung einer Unterspannungs-Fehlermeldung infolge eines durch Einschaltstromspitzen bedingten Spannungseinbruchs vorgesehene Fehlerunterdrückungseinrichtung (43, 45) angeordnet ist, wobei das Ausgangssignal des Negators (44) zur Ansteuerung des Relais (23) vorgesehen ist.

10. Elektrische Sicherheitseinrichtung nach Anspruch 5 und 7, dadurch gekennzeichnet, daß das abfallverzögerte Zeitglied (12) als Zeitrelais ausgebildet ist, das der Schützspule (9) sowie dem Magnet (10) parallelgeschaltet ist und zumindest einen Relaiskontakt (11) in der Steuerleitung (5) steuert, der zur Ansteuerung von Bremsen der Druckmaschine vorgesehen ist.

**Claims**

1. Electrical safety device for the control (7) of a printing press with at least one control transformer (1) equipped with several primary and secondary taps (3, 4) of different voltage levels in which a voltage monitoring device (18) connected into one of several secondary control lines (5) is equipped withan overvoltage comparator (35) and with an undervoltage comparator (36) and is coupled to a voltage switchover device (24) which is allocated to the primary taps (3) characterized by the fact that the voltage monitoring device (18) is equipped with a storage device (40) which is coupled to several fault suppression devices (12 ; 38 ; 39 ; 43 ; 45 ; 47) activated by time which are provided for preventing and/or delaying voltage fault messages due to switching operation of the voltage monitoring device (18), and that the voltage switchover device (24) is provided with a switching disabling devoce (10, 29, 30) operating as a function of the status of the storage device (40).

2. Electrical safety device in accordance with Claim 1 characterized by the fact that one of the fault suppression devices (43, 45) is provided at least for preventing the storage of an undervoltage fault message as a result of a voltage drop caused by power up peaks.

3. Electrical safety device in accordance with Claim 1 characterized by the fact that one of the fault suppression devices (47) can be activated only during the power-up phase of the voltage monitoring device (18) and is provided for preventing voltage faults due to transient responses relating to the power-up phase.

4. Electrical safety device in accordance with Claim 1 characterized by the fact that one of the fault suppression devices (38) is designed as a differentiator to prevent storage of an overvoltage fault message in the event of low-energy voltage peaks and a further fault suppression device (39) is designed as an integrator to prevent storage of an undervoltage fault message in the event of voltage drops down to a specified magnitude.

5. Electrical safety device in accordance with Claim 1 characterized by the fact that one of the fault suppression devices (12) is designed as a delayed-response time element for switching off at least one control voltage with a time lag.

6. Electrical safety device in accordance with Claim 1 characterized by the fact that the voltage switchover device (24) is provided with two additional voltage interruption positions (26) as well as with a undervoltage connection (27) and an overvoltage connection (28).

7. Electrical safety device in accordance with Claim 1 characterized by the fact that the voltage monitoring device (18) is provided with a voltage control unit (19) connected in parallel and an NO contact which is connected to a common control voltage together with a protective coil (9) connected in series and a magnet (10) connected in parallel to the latter, whereby the protective coil (9) controls protective contacts (8) located in the control lines (5) and the magnet (10) meshes together with a switching tappet (30) into a locking lever (29) which is pivoted on a contact (25) of the voltage switchover device (24).

8. Electrical safety device in accordance with Claim 7 characterized by the fact that the voltage monitoring device (18) is provided with a rectifier (31) downstream of which is an actual value voltage divider (32), with a constant voltage source (13) being located downstream of the rectifier (31) for supplying the voltage of a limiting voltage divider (33), and that both the actual value voltage divider (32) as well as the limiting voltage divider (33) are connected to both the overvoltage comparator (35) and to the undervoltage comparator (35), downstream of whose outputs is provided an AND element (37) whose output signal is provided for actuating a relay (23) which controls the NO contact (20) of the voltage monitoring device (18).

9. Electrical safety device in accordance with one of Claims 1 to 8 characterized by the fact that the fault suppression device designed as a differentiator is connected between the two inputs of the overvoltage comparator (35) and that the fault suppression device (39) designed as an integrator is connected between the actual value voltage divider (32) and the undervoltage comparator (36), the storage device (40) being located downstream both of the overvoltage comparator (35) as of the undervoltage comparator (36), it being possible to control the reset input of this storage device via the fault suppression device (47) which can be activated only during the power-up phase of the voltage monitoring device (18) or via an additional reset device (21, 22, 48), and that the fault suppression device (43, 45) provided for preventing storage of an undervoltage fault message as a result of a voltage drop due to power-up peaks is located between the output of a negator (44) downstream of the storage device (40) and a reset input of the storage device (40), with the output signal of the negator (44) being provided to actuate the relay (23).

10. Electrical safety device in accordance with Claims 5 and 7 characterized by the fact that the delayed-response time element (12) is designed as a time relay which is connected in parallel to the protective coil (9) and to the magnet (10) and controls at least one relay contact (11) in the control line (5) which is provided for actuating the brakes of the printing press.

### Revendications

1. Dispositif électrique de sécurité pour la commande (7) d'une machine à imprimer, comportant au moins un transformateur de commande (1) pourvu de plusieurs prises (3, 4) de primaire et de secondaire de différentes valeurs de tension et dans lequel est branché, dans l'un de plusieurs conducteurs de commande (5) placés du côté secondaire, un dispositif de contrôle de tension (18) qui est pourvu d'un comparateur de surtension (35) et d'un comparateur de soustension (36) et qui est relié à un dispositif de commutation de tension (24) associé aux prises de primaire (3) et de secondaire, caractérisé en ce que le dispositif de contrôle de tension (18) est pourvu d'un dispositif de mémorisation (40) qui est couplé avec plusieurs dispositifs de suppression de défauts (12 ; 38 ; 39 ; 43, 45 ; 47) pouvant être actionnés temporellement et qui sont prévus pour empêcher et/ou retarder des signalisations de défauts de tension engendrées par des processus de commande du dispositif de contrôle de tension (18) et en ce que le dispositif de commutation de tension (24) est pourvu d'un verrou de commande (10, 29, 30) qui est fonction de l'état du dispositif de mémorisation (40).

2. Dispositif électrique de sécurité selon la revendication 1, caractérisé en ce qu'un (43, 45) des dispositifs de suppression de défauts est prévu au moins pour empêcher la mémorisation d'une signalisation de défaut de soustension par suite d'une baisse de tension provoquée par des pointes de courant d'enclenchement.

3. Dispositif électrique de sécurité selon la revendication 1, caractérisé en ce qu'un (47) des dispositifs de suppression de défauts peut être actionné sauf pendant la phase d'enclenchement du dispositif de contrôle de tension (18) et est prévu pour empêcher un défaut de tension en relation avec la phase d'enclenchement et conditionné par le processus d'oscillation.

4. Dispositif électrique de sécurité selon la revendication 1, caractérisé en ce qu'un (38) des dispositifs de suppression de défauts est agencé comme un élément de différenciation pour empêcher la mémorisation d'une signalisation de défaut de surtension pour des pointes de tension de faible énergie et un autre (39) des dispositifs de suppression de défauts est agencé comme un intégrateur pour empêcher la mémorisation d'une signalisation de défaut de surtension pour des baisses de tension jusqu'à un ordre de grandeur prédéterminé.

5. Dispositif électrique de sécurité selon la revendication 1, caractérisé en ce qu'un (12) des dispositifs de suppression de défauts est agencé comme un organe de temporisation à désexcitation retardée en vue d'une coupure retardée d'au moins une tension de commande.

6. Dispositif électrique de sécurité selon la revendication 1, caractérisé en ce que le dispositif de commutation de tension (24) est pourvu de deux positions additionnelles de coupure de tension (26) ainsi que d'une prise de soustension (27) et d'une prise de surtension (28).

7. Dispositif électrique de sécurité selon la revendication 1, caractérisé en ce que le dispositif de contrôle de tension (18) est pourvu d'un appareil de contrôle de tension (19) branché en parallèle ainsi que d'un contact de fermeture (20), qui est soumis, avec une bobine de protection (9) branchée en série et un électro-aimant (10) branché en parallèle à celle-ci, à une tension de commande commune, la bobine de protection (9) commandant des contacts de protection (8) disposés dans les conducteurs de commande (5) tandis que l'électro-aimant (10) agit au moyen d'un poussoir de manœuvre (30) sur un levier de verrouillage (29) accouplé à un contact de commande (25) du dispositif de commutation de tension (24).

8. Dispositif électrique de sécurité selon la revendication 7, caractérisé en ce que le dispositif de contrôle de tension (18) est pourvu d'un redresseur (31) en aval duquel est branché un diviseur de tension réelle (32), le redresseur (31) étant relié en série avec une source de tension constante (13) prévue pour l'alimentation en tension d'un diviseur de tension limite (33), et en ce qu'aussi bien le diviseur de tension réelle (32) que le diviseur de tension limite (33) sont respectivement reliés au comparateur de surtension (35) et au comparateur de soustension (36), dont les sorties sont reliées en série avec une porte ET commune (37), dont le signal de sortie sert à l'excitation d'un relais (23) qui commande le contact de fermeture (20) du dispositif de contrôle de tension (18).

9. Dispositif électrique de sécurité selon une des revendications 1 à 8, caractérisé en ce que le dispositif de suppression de défauts agencé comme un élément de différenciation est branché entre les deux entrées du comparateur de surtension (35), et le dispositif de suppression de défauts (39) agencé comme un intégrateur est branché entre le diviseur de tension réelle (32) et le comparateur de soustension (36), aussi bien le comparateur de surtension (35) que le comparateur de soustension (36) étant branchés en série avec le dispositif de mémorisation (40) dont l'entrée de retour à l'état initial peut être excitée par l'intermédiaire du dispositif de suppression de défauts (47), pouvant être actionné sauf pendant la phase d'enclenchement du dispositif de contrôle de tension (18), ou bien par l'intermédiaire d'un dispositif additionnel de retour à l'état initial (21, 22, 48), et en ce qu'entre la sortie d'un négateur (44) branché en aval du dispositif de mémorisation (40) et une entrée d'excitation du dispositif de mémorisation (40) est placé le dispositif de suppression de défauts, prévu pour empêcher la mémorisation d'une signalisation de défaut de soustension par suite d'une baisse de tension provoquée par des pointes du courant d'enclenchement, le signal de sortie du négateur (44) servant à l'excitation du relais (23).

10. Dispositif électrique de sécurité selon les revendications 5 et 7, caractérisé en ce que l'organe de temporisation (12) à désexcitation retardée est agencé comme un relais de temporisation, qui est branché en parallèle à la bobine de protection (9) et à l'électro-aimant (10) et qui commande au moint un contact de relais (11) prévu dans le conducteur de commande (5) et servant à l'actionnement des freins de la machine à imprimer.

Fig. 1

0 064 642

Fig. 2

0 064 642

Fig. 3

Fig. 4

0 064 642